(19) Europäisches Patentamt
European Patent Office
Office européen des brevets

(11) Veröffentlichungsnummer: **0 438 692 A2**

(12) **EUROPÄISCHE PATENTANMELDUNG**

(21) Anmeldenummer: **90123782.6**

(22) Anmeldetag: **11.12.90**

(51) Int. Cl.⁵: **C08K 5/3477**, C08L 81/02

(30) Priorität: **24.01.90 DE 4001903**

(43) Veröffentlichungstag der Anmeldung: **31.07.91 Patentblatt 91/31**

(84) Benannte Vertragsstaaten: **BE DE FR GB IT**

(71) Anmelder: **BAYER AG**
**W-5090 Leverkusen 1 Bayerwerk(DE)**

(72) Erfinder: **Köhler, Burkhard, Dr.**
**Mündelheimer Strasse 94**
**W-4150 Krefeld 11(DE)**
Erfinder: **Wehnert, Wolfgang, Dr.**
**Bodelschwinghstrasse 14**
**W-4150 Krefeld(DE)**

(54) **Mischungen aus Polyarylensulfiden und Aryloxytriazinen.**

(57) Die Erfindung betrifft Mischungen aus Polyarylensulfiden, Aryloxytriazinen und gegebenenfalls anderen Zusätzen. Die Mischungen zeichnen sich durch gute mechanische Eigenschaften aus.

EP 0 438 692 A2

# MISCHUNGEN AUS POLYARYLENSULFIDEN UND ARYLOXYTRIAZINEN

Die Erfindung betrifft Mischungen aus Polyarylensulfiden, Aryloxytriazinen und gegebenenfalls anderen Zusätzen. Die Mischungen zeichnen sich durch gute mechanische Eigenschaften aus.

Polyarylensulfide (PAS) sind bekannt (z.B. US-A 3 354 129, EP-A 171 021). Sie sind inerte, hochtemperaturbeständige Thermoplaste, die einen hohen Füllgrad, z.B. mit Glasfasern und/oder anderen organischen Füllstoffen erlauben. Der Einsatz dieser Polymeren, insbesondere des Polyphenylensulfids (PPS), nimmt in Bereichen zu, die bislang Duroplasten vorbehalten waren.

PPS hat mechanische Eigenschaften, die für einige Anwendungen, z.B. im Spritzgußbereich unzureichend sind. Insbesondere sind Biege- oder Zugfestigkeit, Randfaserdehnung, Schlagzähigkeit und Elastizitätsmodul für die Praxis häufig nicht ausreichend. Es hat sich daher als Vorteil erwiesen, PPS z.B. durch Abmischung mit anderen Thermoplasten, z.B. mit Polycarbonaten in den genannten Eigenschaften zu verbessern (z.B. JP-A 51-59952, EP-A 104 543, US-A 4 021 596).

Für bestimmte Anwendungsgebiete ist das Eigenschaftsprofil derartiger Abmischungen jedoch nicht immer ganz befriedigend.

Es ist bekannt, daß PPS sich durch Abmischung mit z.B. Maleinimiden in seinen Eigenschaften modifizieren läßt. Meist wird dabei eine Verzweigung von PPS bewirkt, da z.B. PPS unter oxidativen Bedingungen mit Maleinimiden umgesetzt wird (JP-A 021 876) oder PPS mit Verbindungen umgesetzt wird, die mindestens drei Maleinimidgruppen und einen Triazinring enthalten (z.B. JP-A 202 162, EP-A 105 639).

Es wurde nun gefunden, daß Abmischungen von Polyarylensulfiden (PAS), vorzugsweise von Polyphenylsulfid (PPS), mit geringen Mengen an Aryloxytriazinen und gegebenenfalls anderen Zusatzstoffen sich durch ihre mechanischen Eigenschaften, z.B. Zähigkeit, Biegefestigkeit, Randfaserdehnung usw. besonders auszeichnen.

Gegenstand der Erfindung sind daher Mischungen aus

A) 99,9 bis 20 Gew.-%, bevorzugt 90 bis 20 Gew.-%, Polyarylensulfiden, bevorzugt PPS,

B) 0,1 bis 10 Gew.-%, bevorzugt 0,5 bis 5 Gew.-%, eines Aryloxytriazins der Formel (I)

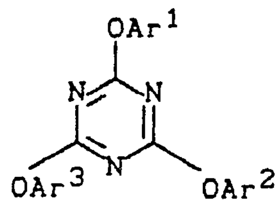

(I),

wobei

Ar¹-Ar³ gleich oder verschieden sein können und für einen $C_6$-$C_{14}$-Arylrest, der mit $C_1$-$C_4$-Alkyl-, $C_6$-$C_{14}$-Aryl-, $C_1$-$C_6$-Alkoxy-, $C_6$-$C_{14}$-Arylsulfon-, $C_1$-$C_4$-Carbonsäureanhydrid-, $C_1$-$C_4$-Carbonsäureester-, $C_1$-$C_4$-Carbonsäureamid-, $c_1$-$c_4$-Acyl-oder $C_6$-$C_{14}$-Aroylgruppen substituiert sein kann und

C) 0 bis 79,9 Gew-%, bevorzugt 9,9 bis 79,9 Gew.-%, mineralischen Füll- und Verstärkungsstoffen.

Beispiele für erfindungsgemäße Stoffe der Formel (I) sind

2,4,6-Triphenoxy-1,3,5-triazin,
2,4,6-Tris-(4-methylphenoxy)-1,3,5-triazin,
2,4,6-Tris-(2-naphthoxy)-1,3,5-triazin,
2,4,6-Tris-(1-naphthoxy)-1,3,5-triazin,
2,4,6-Tris-(2-methylphenoxy)-1,3,5-triazin,
2,4,6-Tris-(4-methoxycarbonyl-phenoxy)-2,3,5-triazin,
2,4,6-Tris-(4-benzoyl-phenoxy)-1,3,5-triazin.

In einer besonderen Ausführungsform kann das Triazin auch in Form von Triazinharzen eingesetzt werden.

Die erfindungsgemäßen Stoffe der Formel (I) werden z.B. aus Cyanurchlorid und Phenolat (z.B. analog Chemische Berichte 1888, 18, 765) hergestellt.

Füll- und Verstärkungsstoffe sind z.B. mineralische Füllstoffe oder Zusatzstoffe, z.B. Glimmer, Microtalk, Talkum, Quarzmehl, Metalloxide und -sulfide wie $TiO_2$, $ZnO$, $ZnS$, Graphit, Ruß, Fasern aus z.B. Quarz und

Kohle, Carbonate wie $MgCO_3$, $CaCO_3$ oder Sulfate, z.B. $CaSO_4$, $BaSO_4$, Glasfasern, Glaskugeln usw.

Die Verstärkungsstoffe, vorzugsweise die Glasfasern können mit Aminosilanen in üblicher Art beschlichtet sein. Die Glasfasern haben einen Durchmesser von 1 bis 20 µm, bevorzugt 1,5 bis 10 µm. Es können auch Endlosfasern eingesetzt werden und/oder Herstellungsverfahren gewählt werden, bei denen die Länge der Fasern in der fertigen erfindungsgemäßen Abmischung 0,05 bis 10, bevorzugt 0,1 bis 2 mm, beträgt. Es können auch Endlosfasern (Rovings) eingesetzt werden in Verfahren zur Herstellung von endlosverstärktem Unidirektionalverbund.

Gegebenenfalls können auch anstelle der Glasfasern handelsübliche Glaskugeln eingesetzt werden, z.B. Ballotini-Glaskugeln. Diese können auch bevorzugt in Mischung mit Glasfasern als weitere mineralische Füllstoffe dienen.

Als weitere übliche Zusatzstoffe können Pigmente, Entformungsmittel, E-Wachse, Fließhilfsmittel, Nucleierungsmittel oder Stabilisatoren eingesetzt werden.

Die erfindungsgemäßen Mischungen können auf übliche Art und Weise durch Extrusion hergestellt werden.

Die erfindungsgemäßen Mischungen können auf übliche Weise zu geformten Körpern, z.B. Formteilen, Halbzeug, Fasern, Folien, Profilen usw. verarbeitet werden. Die erfindungsgemäßen Mischungen können generell in vorteilhafter Weise dort eingesetzt werden, wo thermoplastisch verarbeitbare Massen eingesetzt werden.

Beispiele

Die Herstellung der erfindungsgemäßen Mischungen erfolgte auf einem Doppelwellenextruder ZSK 32 von Werner und Pfleiderer bei 320° C.

Das verwendete PPS wies eine Schmelzviskosität von 59 Pa.s (306° C), Schubspannung = 1.000 $s^{-1}$ auf und wurde nach EP-A 171 021 hergestellt.

Als Glasfasern wurde die geschlichtete Schnittglasfaser Bayer CS 7916® zu 40 Gew.-% zusammen mit 0,5 Gew.-% Microtalk eingesetzt. Der Haftvermittler der Glasfaser ist ein Aminosilan.

Die Mischungen wurden granuliert und zu Prüfstäben (z.B. der Maße 80 x 10 x 4 mm) verspritzt. Diese wurden hinsichtlich Biegefestigkeit, Randfaserdehnung, Biege-E-Modul und Schlagzähigkeit $a_n$ (reversed notched ISO 180) untersucht.

Vergleichsbeispiel 1

Gemischt wurden 59,5 Gew.-% PPS mit den Füllstoffen.

Beispiel 1

Gemischt wurden 59 Gew.-% PPS und 1 Gew.-% 2,4,6-Triphenoxy-1,3,5-triazin mit den Füllstoffen.

| Beispiel | Biegefestigkeit MPa | Randfaserdehnung % | E-Modul MPa | Izod-Schlagzähigkeit kJ/m² |
|---|---|---|---|---|
| Vgl. 1 | 249 | 1,86 | 13.060 | 28,5 |
| 1 | 290 | 2,20 | 12.490 | 39,0 |

**Patentansprüche**

1. Mischungen aus
   A) 99,9 bis 20 Gew.-% Polyarylensulfiden,
   B) 0,1 bis 10 Gew.-% eines Aryloxytriazins der Formel I

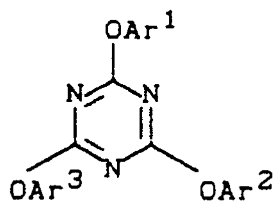

(I),

wobei

Ar¹-Ar³ gleich oder verschieden sein können und für einen $C_6$-$C_{14}$-Arylrest, der mit $C_1$-$C_4$-Alkyl-, $C_6$-$C_{14}$-Aryl-, $C_1$-$C_6$-Alkoxy-, $C_6$-$C_{14}$-Arylsulfon-, $C_1$-$C_4$-Carbonsäureanhydrid-, $C_1$-$C_4$-Carbonsäureester-, $C_1$-$C_4$-Carbonsäureamid-, $C_1$-$C_4$-Acyl- oder $C_6$-$C_{14}$-Aroylgruppen substituiert sein kann und

C) 0 bis 79,9 Gew-% mineralischen Füll- und Verstärkungsstoffen.

**2.** Verwendung der Mischungen aus Anspruch 1 zur Herstellung geformter Körper.